# EUROPEAN PATENT APPLICATION

(11) **EP 1 708 418 A1**
(43) Date of publication of application: **04.10.2006**
(21) Application number: 06006251.0
(22) Date of filing: 27.03.2006
(51) Int. Cl.: H04L 12/28, H04B 7/26

(54) **Method and apparatus for implementing medium access control in wireless distributed network**

(30) Priority: 31.03.2005 CN 200510011507
(71) Applicant: NTT DoCoMo Inc., Chiyoda-Ku Tokyo 100-6150 (JP)
(72) Inventor: Du, Lei, South Rd Haidian District Beijing 100080 (CN); Chen, Lan, South Rd Haidian District Beijing 100080 (CN)
(74) Representative: Schoppe, Fritz

(57) **Abstract**

The present invention discloses a medium access control method in a wireless distributed network which comprises the steps of: transmitting a CTS packet after delaying for an SIFS time interval, when a node in the network receives a RTS packet addressed to the node; detecting a channel and timing, if the channel is detected in idle within a time interval of the clearing threshold after the completion of the CTS packet transmission, then transmitting a clearing packet after the time interval of the clearing threshold is elapsed; resetting their current network allocation vectors of all the nodes receiving the clearance packet to zero. The present invention resolves a problem of unnecessary setting of the network allocation vectors due to the transmission failure of the CTS. The throughput and time delay of the wireless system is improved by initiating information for clearing network allocation vectors by a receiver.

## Description

### BACKGROUND OF THE INVENTION

### FIELD OF INVENTION

The present invention relates to a method and apparatus for implementing Medium Access Control (MAC) in wireless distributed network, more specifically, to a method and apparatus for eliminating unnecessary setting of the network allocation vectors in a wireless local area network (LAN). The method and apparatus of the present invention is capable of removing the setting of network allocation vectors, which is not necessary, due to a transmission failure, and improving the throughput and time delay of a wireless system by transmitting information for clearing the network allocation vectors by a receiver.

### DESCRIPTION OF PRIOR ART

Wireless Medium Access Control (MAC) may be classified into a centralized control and a distributed control. In the distributed control, all nodes such as mobile terminals only process the information that controls the node itself respectively, and equally share the right for channel access. In such a distributed control, the nodes share the resources dependent on the designs and implementation of the distributed medium access control.

However, since there is no centralized control device collectively assigning the resource for respective nodes, the nodes independently control the transmission of their respective packets, the hidden terminals and exposed terminals in the distributed network are therefore the main factor that affects the performance of the nodes. For example, in the case where two nodes which are not within the sensing range of each other independently transmit data packets to a same receiving node, the packets from the two different transmitting nodes will collide at the receiving node, and the performance of the wireless system is reduced due to the collision. On the contrary, in the case where two nodes which are within the sensing range of each other transmit packets to respective receiving nodes which are not within the sensing range of each other, at that time, one of the transmitting nodes will not transmit its own packets because this transmitting node detects the transmission of the other transmitting node. Therefore, the transmission which should be executed for the reason that the transmission of one node would not interfere the transmission of the other node is actually forbidden due to the detection of simultaneous transmission of a surrounding node. This results in a waste of the wireless system resources.

The specification in IEEE 802.11 specifies the characteristics of the medium access control (MAC) layer and the physical layer for the wireless local area network (WLAN). The protocol of the MAC layer defines a point coordination function (PCF) for a contention free period (CFP) and a distributed coordination function (DCF) for a contention period (CP) based on whether there is an access point participating in the communication. The PCF provides a polling mechanism used as a random access protocol. According to the PCF, the access point polls all nodes within its communication range to achieve a collision-free transmission. In a more popular communication without access points (AP), the DCF employs a carrier sensing multiple access with collision avoidance (CSMA/CA) protocol. According to CSMA/CA, each node independently decides whether or not access a channel, and enters a back-off procedure when the access fails so as to re-access the channel. The specification as described above provides a more flexible and efficient wireless communication protocol for a self-organized network.

In order to make respective independent nodes equally and effectively share the wireless channels and reduce collisions of data packets, the DCF defines a handshaking procedure based on a request to send a request to send (RTS) packet/ a clear to send (CTS) packet/ a data packet (DATA)/ an acknowledgement (ACK) packet. That is, a (RTS/CTS/DATA/ACK) handshaking procedure. In addition, the network allocation vectors (NAV) independently set in each node partially resolves the problem due to the hidden terminals in the distributed network, and further improves the performance of the wireless system.

However, there is still a possibility of colliding with other packets and generating errors due to the effects from other wireless communication even if these RTS and CTS packets are very short. If the packets are not correctly received by a destination node, it may be received by irrelevant nodes in the range of the transmission. In this case, a process of setting network allocation vectors (NAVs) will occur in error.

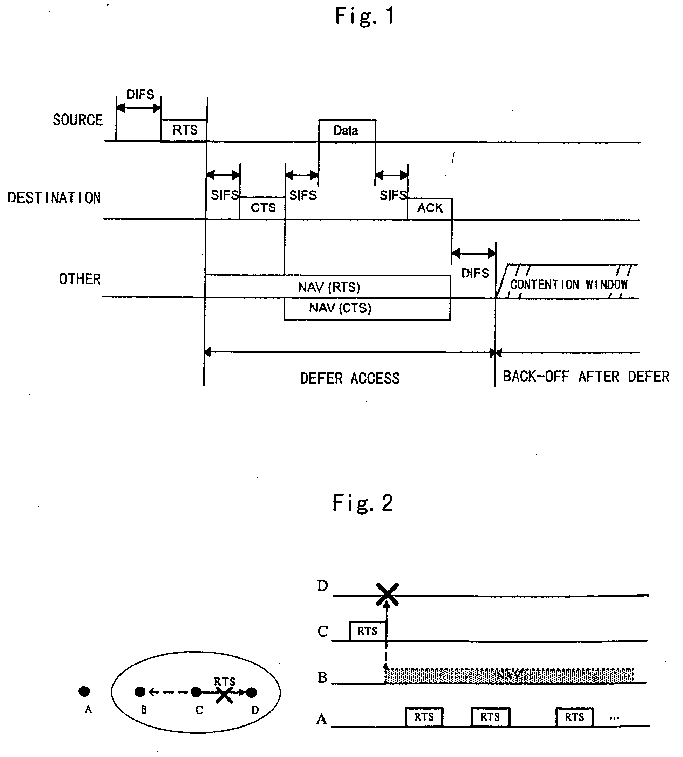

Specifically, as shown in Fig. 1, when a packet arrives at a certain node, and the node detects that a channel is in idle and the idle period is equal or longer than a DCF inter-frame space (DIFS), the node immediately transmits a short RTS packet. On the contrary, if the node which receives the packet detects that the channel is busy or the idle period is shorter than the DIFS, then it will wait until the channel is idle and the idle period is equal or longer than the DCF inter-frame space (DIFS) and enter a back-off process. After the completion of the back-off process, the RTS is transmitted. The RTS packet contains a transmitter address (TA), a receiver address (RA), and a duration (Duration) required for completing subsequent packet transmission. A value of the Duration is equal to the sum of a duration required for transmitting subsequent data packet, the time period for transmitting one CTS packet and one ACK packet, and the time period of three short inter-frame spaces (SIFS). After correctly receiving the RTS and waiting for one short inter-frame space (SIFS), a receiving node transmits a short CTS packet in response to the reception of the RTS. The CTS packet contains a receiving node address RA copied from the TA in RTS and the duration required for completing subsequent packet transmission. Here, the duration is equal to a value obtained by subtracting the time period for transmitting the CTS packet and the time period of one SIFS from the duration in the received RTS. After receiving the CTS, the transmitting node waits for one SIFS and transmits a data (DATA) packet. Upon receiving the DATA packet, the receiving node waits for one SIFS and then transmits an acknowledgement (ACK) packet to acknowledge the receiving. Meanwhile, for avoiding packet collisions among the hidden terminals, all non-receiving nodes which receive the RTS within a communication range of the transmitting node, and all non-transmitting nodes which receive the CTS within a communication range of the receiving node will compare the Duration values in these packets with current NAV value after receiving the above packets. Then, the NAV is updated with a larger value. Further, all non-receiving nodes and all non-transmitting nodes specify that they only access the contended wireless channel when their respective NAV values become zero. Thus, with the short RTS/CTS handshaking procedure before the data packet and carrier sensing based on back-off algorithm, the possibility of collision occurring during the accessing channel of respective independent nodes in the distributed network is reduced. Further, with introducing the NAV to virtually preserve the wireless resources, it may suppress the packet transmitted by the node which is currently within the range of the communicating nodes. It is possible to ensure the collision-free transmission of the data packets in a certain degree.

However, since whether or not the packet is successfully transmitted in the DCF is dependent on the successful interaction of the RTS/CTS and the correctly setting of the network allocation vector in surrounding nodes. When the RTS or the CTS is not correctly received by the receiving node or the transmitting node respectively due to packet collisions, signal fading in the wireless transmission or the moving of the node, the setting of the NAVs in other nodes within the communication range will delay the packet transmission of the present node, thereby resulting in waste of the wireless system resources.

Fig. 2 shows a schematic diagram of setting the NAVs when the receiving node can not successfully receive the RTS transmitted from the transmitting node. The left portion of Fig. 2 denotes the position distribution of the transmitting and receiving nodes, and the right portion denotes the settings of the NAVs of respective nodes. As shown in Fig. 2, when a Node C transmits a packet to a Node D, one short RTS packet is transmitted firstly to the Node D. At that time, the Node D does not correctly receive the RTS transmitted from the Node C due to some reasons such as packet collisions, signal fading or the moving of the node and likes. At the same time, a Node B (on the right of Fig. 2) successfully receives the RTS and sets its NAV. Then, a RTS transmitted from a Node A to the Node B will not be responded within the duration represented by the NAV set by the Node B. Actually, since the transmission of the RTS from the Node C to the Node D is fail, the Node C can not access into the channel, and the setting of the NAV in the Node B which receives the RTS transmitted from the Node C to the Node D delays the packet transmission between the Node B and the other nodes (e.g., Node A) within the communication range thereof. Generally, such a case is called as an unnecessary setting of the NAVs due to the reception of the RTS.

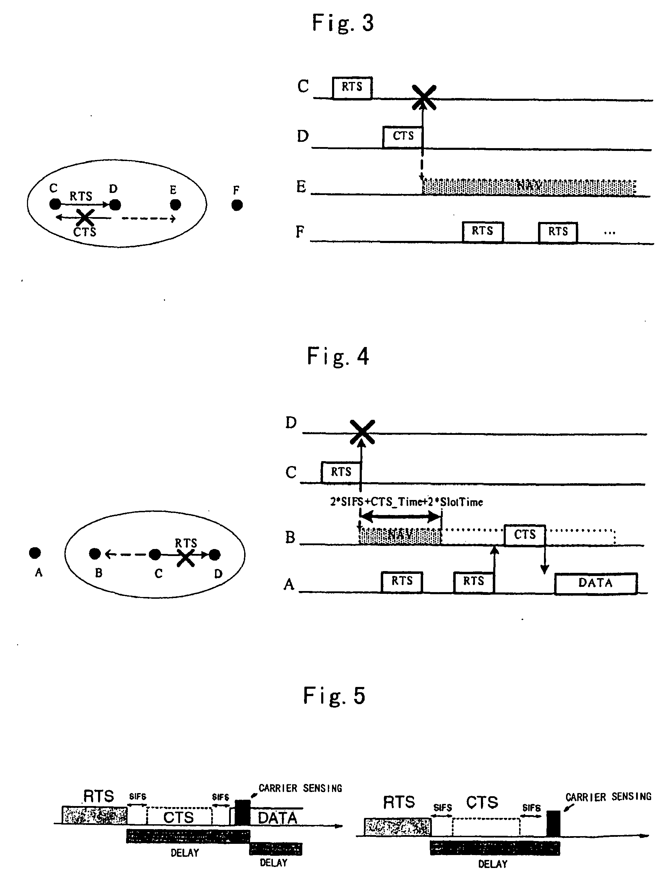

Similarly, if the transmission of the CTS packet is fail, the setting of network allocation vectors in other non-transmitting nodes within the communication range of the receiving node is not necessary. Such a setting is generally called as unnecessary setting of the NAVs due to the reception of the CTS. As shown in Fig. 3, for example, when the Node C transmits the RTS packet to the Node D in the network, the Node D transmits the CTS packet to the Node C in response to the reception of the RTS packet. For some reasons, the Node C may not receive the CTS packet transmitted by the Node D. However, a Node E within the communication range of the Node D receives the CTS packets and thus sets its NAV. At this time, the RTS packet transmitted from a Node F (at the right side of the Node E in Fig. 3) to Node E within the duration represented by the NAV set by the Node E will not be responded. Therefore, the packet transmissions between the Node E and other nodes (such as the Node F) which are in the communication range of Node E are unnecessarily delayed.

With studying the MAC protocols of the WLAN in prior art, packet collisions are considered as the most significant factor influencing the performance of the wireless system. In the case where the packet transmission failure is due to packet collisions, an error transmission rate of the CTS is much less than that of the RTS. Therefore, more attention is paid on the unnecessary setting of the NAVs due to the reception of the RTS. For instance, 802.11 DCF defines a method for resetting an NAV. In "Media access control and physical layers specifications for Wireless local area network" specified in ANSI/IEEE Std 802.11-1999, 1999, it states that a node is allowed to reset its NAV to zero when information used by the node for updating the NAV is carried by an RTS, and the node does not detect the information that the channel is busy within a time period of (2*SIFS + time period required for transmitting the CTS + 2* slot time) after receiving the RTS packet. The 2* slot time is added in above expression because the time delay factors during transmission is taken into account, as shown in Fig. 4. In Fig. 4, if Node B does not detect that the channel is busy within the time period of (2*SIFS + time period required for sending the CTS + 2* slot time) after it receives the RTS packet transmitted by the Node C, the NAV of the Node B is then reset to zero. Therefore, the Node B can access the channel to receive packets from other nodes (such as the Node A) and to transmit the CTS packet.

In addition, in S. Ray, J. Carruthers and D. Ktarobinski, "RTS/CTS-induced Congestion in Ad-hoc Wireless LANs", IEEE WCNC 2003, New Orleans, pp. 1516-1521, March 2003, another method for resolving the unnecessary setting of the NAVs due to the reception of the RTS is proposed. The method defines a delay period, and specifies that after all non-receiving nodes within the communication range of a transmitting node delay their own transmission for that time period after they receive a RTS. If those nodes still detect that the channel is busy after the delay time, they are then continuously delayed, as shown in Fig. 5A. Otherwise, they can access the channel after the delay time is elapsed, as shown in Fig. 5B.

Above described methods are based on the pre-defined handshaking procedures. That is, if the RTS/CTS packet can be exchanged successfully, a transmitting node will definitely transmit data packets within a certain time period after transmitting the RTS. Thus, all the non-receiving nodes around the transmitting node may judge whether the current transmission is successful or failed based on whether it continuously detect that the channel is busy after the certain time period. For those nodes which set the NAV due to the reception of the CTS, they can not judge the communication status from the reception procedures of the receiving nodes because the communication status is independent of whether the transmission is successful or not. Therefore, the methods as described above can not resolve the unnecessary setting of NAVs due to the reception of the CTS.

Additionally, the characteristics of wireless transmission make the packet transmissions not only relied on collisions, but more influenced by unpredicted wireless environment such as fading, the moving of the object, space environment and so on. Therefore, it is necessary to provide an effective improvement mechanism to resolve the unnecessary setting of the NAVs due to the transmission failure of the CTS, which increases resource availability by clearing unnecessary NAVs.

### SUMMARY OF THE INVENTION

It is therefore an object of the present invention to provide a medium access control (MAC) method and apparatus for a wireless distributed network to resolve the unnecessary setting of the NAVs due to the transmission failure of the CTS.

To achieve the above object of the present invention, according to one aspect thereof, there is provided a medium access control method in a wireless network comprising the steps of: receiving a request to send (RTS) packet, and detecting whether a receiving node address contained in the RTS packet is identical with the address of a present node; transmitting a clear to send (CTS) packet after delaying a SIFS time interval in response to the received RTS packet when the receiving node address contained in the RTS packet is identical with the address of the present node, and detecting a channel; if the node transmitting the CTS detects that the channel is idle after a predetermined time interval of the clearing threshold, the transmitting node transmits a clearance packet into the network to reset network allocation vectors (NAVs) of other nodes to zero.

According to another aspect of the present invention, there is provided a medium access control method in a wireless distributed network comprising the steps of: detecting a CTS packet after delaying a SIFS time interval when a node in the network receives a RTS packet addressed to the node; detecting a channel and timing, if the channel is always detected to be idle for a time interval of clearing threshold after the completion of the CTS packet transmission, transmitting a clearance packet after the clearing threshold is over; the network allocation vectors of all the nodes receiving the CTS packet is reset to zero.

According to another aspect of the present invention, there is provided a medium access control method in a wireless distributed network comprising the steps of: transmitting by a transmitting node, a request to send (RTS) packet to a destination receiving node; receiving said RTS packet by the destination receiving node, and transmitting a clear to send (CTS) packet after delay a SIFS time interval by the receiving node; detecting channel status after the receiving node transmits the CTS packet; if the destination receiving node detects that the channel status is idle after a predetermined time interval of the clearing threshold, then transmitting a clearing packet into the network to reset network allocation vectors of other nodes to zero.

According to another aspect of the present invention, there is provided a medium access control apparatus in a wireless distributed network, comprising: a reception processing means for judging whether a packet is successfully received or not and determining the type of the packet, and instructing subsequent operations based on the judgment and determination results; a channel detecting and timing means for detecting a channel status and timing, after transmitting a clear to send (CTS) packet, detecting the status of the channel for a predetermined clearing threshold, and when the channel is idle after said clearing threshold, instructing a transmitting means to transmit a clearing packet; a network allocation vector (NAV) storage timing means for storing a NAV and updating a value of the NAV based on the processing result of the reception processing means.

According to another aspect of the present invention, there is provided a medium access control node used in a wireless distributed network, comprising: a transmitting means for transmitting packets; a receiving means for receiving data from a wireless channel and sending the data into a reception processing means; a reception processing means for judging whether a packet is successfully received or not and determining the type of the packet, and instructing subsequent operations based on the judgment and determination results; a channel detecting and timing means for detecting the channel status and timing, after transmitting a clear to send (CTS) packet, detecting the status of the channel for a predetermined clearing threshold, and when the channel is idle after said clearing threshold, instructing the transmitting means to transmit a clearing packet; a network allocation vector (NAV) storage timing means for storing a NAV and updating a value of the NAV based on the processing result of the reception processing means.

According to the present invention, the problem of unnecessary setting of the NAVs due to transmission failure of the CTS can be resolved so as to improve the throughput and time delay of the wireless system by initiating information for clearing the NAVs by a receiver.

### BRIEF DESCRIPTION OF THE DRAWINGS

The above and other objects, features and advantages of the present invention will be apparent by the following descriptions of the preferred embodiments of the present invention in conjunction with the accompanying drawings, in which:
Fig. 1 is a schematic diagram for illustrating a handshaking process based on a request to send (RTS) packet/ a clear to send (CTS) packet/ a data (DATA) packet/ an acknowledgement (ACK) packet for a mobile node in a wireless local area network according to the prior arts;
Fig. 2 is a schematic diagram for illustrating unnecessary NAV settings due to the reception of the RTS according to the prior arts;
Fig. 3 is a schematic diagram for illustrating unnecessary NAV settings due to the reception of the CTS according to the prior arts;
Fig. 4 is a schematic diagram for illustrating a method for resolving the unnecessary NAV settings due to the reception of the RTS according to the prior arts;
Fig. 5 is a schematic diagram for illustrating another method for resolving the unnecessary NAV settings due to the reception of the RTS according to the prior arts;
Fig. 6 is a block diagram of a medium access control (MAC) apparatus according to an embodiment of the present invention;
Fig. 7 is a timing chart of the MAC according to the embodiment of the present invention; and
Fig. 8 is a flow chart for illustrating a method for performing the MAC control according to the embodiment of the present invention.

### DETAILED DESCRIPTION OF PREFERRED EMBODIMENTS

Hereafter, the embodiments of the present invention will be described in detailed in reference to the accompanying drawings. Those details and function unnecessary to the present invention are omitted as they will obscure the understanding of the present invention.

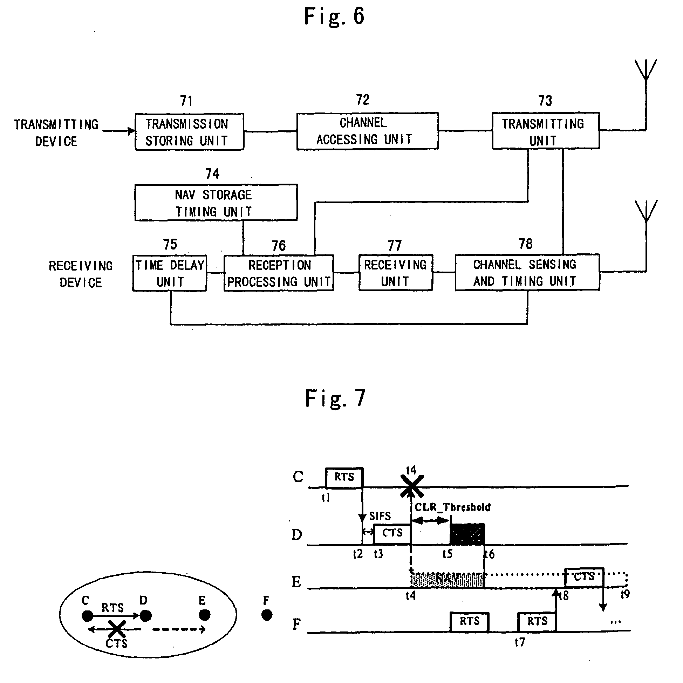

Now, a structure of a medium access control apparatus according to an embodiment of the present invention and operations thereof will be explained by referring to Fig. 6.

As an example, the medium access control apparatus of this embodiment is used for a wireless distributed network. It should be noted that the present invention is not limited thereto and may be used for other networks.

Referring to Fig. 6, the medium access control apparatus according to the embodiment is included in each mobile node such as mobile phone, laptop computer, palm computer. The medium access control apparatus comprises a transmission storing unit 71, a channel accessing unit 72, a transmitting unit 73, a network allocation vector (NAV) storage timing unit 74, a time delaying unit 75, a reception processing unit 76, a receiving unit 77 and a channel detecting and timing unit 78.

For instance, 802.11 DCF is exemplified to describe the present invention, and the carrier sensing and the handshaking process before data transmission are still applied. When a receiving node successfully receives a RTS, the receiving node transmits a CTS packet after delaying a SIFS time interval in response to the reception of the RTS, and prepares to receive a data packet. According to the method of the present invention, a clearing threshold (CLR_Threshold) is defined. If the receiving node detects that data are transmitted on a channel within the time interval of clearing threshold after the completion of the CTS transmission, then the packets are normally received. On the contrary, if the receiving node detects that the channel is still idle after the clearing threshold is over, then one short clearing packet (CLR) is sent. All the nodes successfully receiving the clearing packet will reset their NAVs to zero. Here, the value of the clearing threshold should satisfy the following condition: if the CTS is successfully received by the transmitting node, then after the clearing threshold, the receiving node will definitely begin to receive the data packet transmitted from the transmitting node. For example, it can be preferably defined that CLR_Treshold = SIFS + CS_Time, wherein the CS_Time represents a time period required for completing the carrier sensing.

Next, the operation of the mobile node according to the present embodiment will be described. The transmission storing unit 71 stores the data packet from higher layers. When the node will transmit the data packet, the channel accessing unit 72 decides whether the present node is allowed to access the channel by using CSMA/CA protocol according to the specification of 802.11 DCF. The transmitting unit 73 transmits corresponding packets according to instructions respectively input from the channel accessing unit 72, the reception processing unit 76 and the channel detecting and timing unit 78. Specifically, the channel accessing unit 72 judges whether the channel can be accessed or not when the packets stored in the transmission storing unit 71 are to be transmitted. The transmitting unit 73 transmits the RTS packet to the nodes within the communication range thereof when the channel accessing unit indicates that the conditions for channel accessing are satisfied.

In addition, when the node receives the RTS packet, the reception processing unit 76 indicates that the RTS packet is successfully received. When the receiver address (RA) contained in the RTS packet is the same as the address of the present node, the transmitting unit 73 transmits the CTS packet. Additionally, when the reception processing unit 76 indicates that the CTS packet is successfully received and the receiver address (RA) contained in the CTS packet is the same as that of the present node, the transmitting unit 73 transmits the DATA packet. Further, when the reception processing unit 76 successfully receives the DATA packet and the receiver address RA field in the DATA packet is identical with that of the present node, the transmitting unit 73 transmits an ACK packet. Furthermore, when the channel detecting and timing unit 78 indicates that the channel is still idle after the clearing threshold is over, the transmitting unit 73 transmits the clearing packet (CLR) to set the NAVs to zero. The channel detecting and timing unit 78 detects the channel and counts time in a case of no package transmission. Moreover, when the channel is detected in busy, the receiving means are activated to be ready to receive the data. The status of the channel is detected for the clearing threshold after the CTS packet is transmitted. If the channel is always idle within the period of the clearing threshold, the transmitting unit 73 is instructed to send the CLR packet. The receiving unit 77 receives the data from the wireless channel and sends the received data into the reception processing unit 76 for determining the type(s) of the data.

The reception processing unit 76 judges whether the receiving unit 77 successfully receives the package or not and determines the type of the packets. Further, the reception processing unit 76 instructs next operation according to the processing results. Specifically, if the reception processing unit 76 indicates that a certain type of packets is not successfully received, then the time delaying unit 75 will delay a specific time period. If the reception processing unit 76 indicates that the RTS packet is successfully received and the address of the present node is identical with the RA field contained in the RTS packet, the transmitting unit 73 is activated to be ready to transmit the CTS packet. If the reception processing unit 76 indicates that the RTS packet is successfully received but the address of the present node is not identical with the RA field contained in the RTS packet, then the Duration field of the RTS packet is sent into the NAV storage timing unit 74 to update the NAV. If the reception processing unit 76 indicates that the CTS packet is successfully received and the address of the present node is identical with the RA field contained in the CTS packet, the transmitting unit 73 is activated to prepare for sending the DATA packet. If the reception processing unit 76 indicates that the CTS packet is successfully received but the address of the present node is not identical with the RA field contained in the CTS packet, then the Duration field of the CTS packet is sent into the NAV storage timing unit 74 to update the NAV. If the reception processing unit 76 indicates that the DATA packet is successfully received and the address of the present node is identical with the RA field contained in the DATA packet, the transmitting unit 73 is activated to prepare for sending the ACK packet. If the reception processing unit indicates that the DATA packet is successfully received but the address of the present node is not identical with the RA field contained in the DATA packet, then the Duration field of the DATA packet is sent into the NAV storage timing unit 74 to update the NAV. When the reception processing unit 76 indicates that the ACK packet is successfully received and the address of the present node is identical with the RA field contained in the ACK packet, it is then detected whether the Duration field of the ACK packet is zero or not. If so, it means that transmission is completed. Otherwise, the transmitting unit 73 is activated to prepare for sending subsequent data packet segments. In the case where the reception processing unit 76 indicates that the ACK packet is successfully received and the address of the present node is not identical with the RA field contained in the ACK packet, then the Duration field of the ACK packet is sent into the NAV storage timing unit 74 to update the NAV. If the reception processing unit 76 indicates that the CLR packet is successfully received, then the NAV value currently stored in the NAV storage timing unit 74 is reset to zero. It should be noted that the present invention is not limited to clear the NAV value, but can also be applied to other similar signal packets playing a role of suppression in order to resolve the unnecessary suppression for transmissions caused by the suppression signals.

In the case where the reception processing unit 76 indicates that no packet is successfully received or the channel detecting and timing unit 78 indicates that no corresponding packet transmission is detected, the time delaying unit 75 delays the transmission of the present node for a corresponding time period. The NAV storage timing unit 74 stores the NAV, and updates the NAV according to the judgment of the reception processing unit 76 on the received packets.

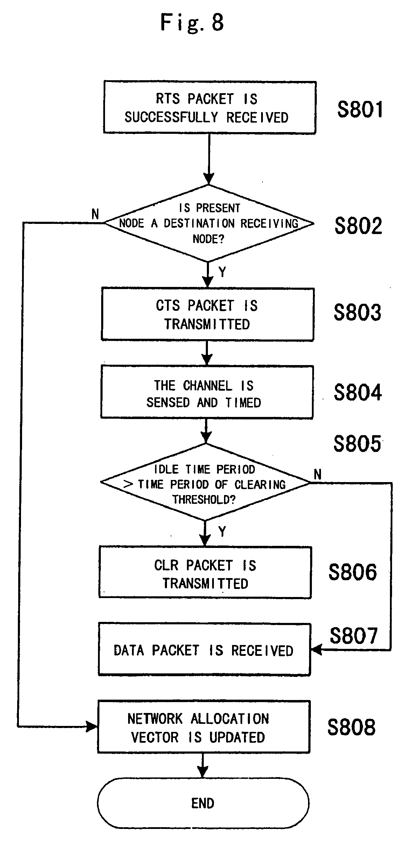

The process of the medium access control method according to the present invention will be described by referring to Figs. 7 and 8 below. Fig. 7 is a timing chart for illustrating the medium access control according to the embodiment of the present invention. Fig. 8 is a flow chart for illustrating the method for implementing the medium access control according to the embodiment of the present invention.

On the left portion of Fig. 7, the position relationships among Nodes C, D, E and F are schematically shown. The Node D is within the communication ranges of the Nodes C and E, and the Node E is within the communication ranges of the Nodes D and F. Additionally, as shown in Fig. 7, the Node C is not within the communication range of the Node F, and the Node F is also not within the communication range of the Node D. The transmitting sequences of respective nodes are shown on the right portion of Fig. 7.

In the transmitting Node C, when there are some packets to be sent in the transmission storing unit 71, channel accessing unit 72 prepares to access the channel. The channel accessing unit 72 employs the CSMA/CA access method according to the specification of the 802.11 DCF. When the channel accessing unit 72 indicates that the conditions for transmitting the packets are satisfied, the RTS packet can be immediately transmitted to the Node D through the transmitting unit 73 (timing t1). After packet transmission, the Node C activates the receiving device to use the channel detecting and timing unit 78 for detecting the channel so as to wait for the response of the Node D.

At step S801, all the nodes within the communication range of the Node C will receive the packets from the wireless environment by using respective receiving units 77, and judge whether the packets are successfully received and determine the type of the received packets by using the reception processing units 76. At step S802, the node(s) receiving the RTS packets judges whether it is a destination receiving node or not. If a node within the communication range successfully receives the RTS packet and the RA field contained in the packet is the same as the address of the node, then the node with the same address is the destination receiving node (the Node D in the present embodiment) (timing t2). At step S803, the Node D as the destination receiving node transmits the CTS through its transmitting unit 73 after waiting for the SIFS time interval (Time t3) in response to the reception. If the RTS is successfully received at step S802 and the RA field of the packet which designate the receiving node is different from the address of the node, then the node is consider as a non-receiving node. The Duration field is extracted from the RTS packet and is compared with the NAV value currently stored in the NAV storage timing unit 74. At step S808, the NAV currently stored in the NAV storage timing unit 74 is updated with the larger value.

After the destination receiving Node D finishes the CTS packet transmission (timing t4), it enters the channel detecting and timing status at step S804 during which the channel is detected by the channel detecting and timing unit 78. At step S805, the destination receiving Node D judges whether the idle period of the channel is longer than the predetermined clearing threshold CLR_Threshold based on the channel detection. If the data transmission is detected on the channel within the time period of the clearing threshold (Time t5), the flow proceeds to step S807 in which the packet is received by the receiving unit 77. If the channel is detected still in idle when the time period of the clearing threshold is elapsed, the flow proceeds to step S806 in which the transmitting device is activated, and the clearing (CLR) packet is transmitted by the transmitting unit 73 (timing t5).

In addition, all the nodes within the communication range of the destination node will receive the packets from the wireless environment by using the receiving units, and judge whether the packets are successfully received and determine the type of the packets with the reception processing units. If the CTS packet is successfully received and the RA field contained in the packet is the same as the address of the node, the node is considered as the transmitting node. The transmitting device will be activated after waiting for the SIFS time interval, and the DATA packet is transmitted by the transmitting unit 73. If the CTS packet is successfully received and the RA field contained in the packet is different from the address of the node, the node is considered as a non-transmitting node. The Duration field is extracted from the CTS packet and is compared with the value stored in the NAV storage timing unit of the node. The NAV stored in the NAV storage timing unit of the node is updated with the larger value (till timing t9 in Fig. 7). If the CLR packet is successfully received, the node clears the current NAV to be zero.

The transmitting node activates the receiving unit to prepare for receiving the packets after completing the RTS transmission. If the CTS packet address destined to the transmitting node is correctly received, then the transmitting node will transmit the DATA packet by using the transmitting unit after delaying the SIFS time interval.

Upon successfully receiving the DATA packet, the destination receiving node transmits the ACK packet after delaying the SIFS time interval in response to the reception of the DATA packet.

In the present embodiment, the destination receiving Node D enters into the channel detecting and timing status after transmitting the CTS. However, the transmitting Node C fails to receive the CTS packet and thus enters into the time delay status. Meanwhile, the Node E detects that the CTS packet transmitted by the destination receiving Node D is successfully received, and the Node E is not the destination receiving node, thus its NAV value is updated equal to (t9 - t4), in which t9 is a time instant for completing this packet transmission predicted by the transmitting node before transmitting the RTS packet.

Since the Node C fails to receive the CTS packet at the timing t4, the Node D detects that the channel is still idle after the time interval of the clearing threshold, i.e., timing t5, in which t5 = t4 + CLR_Threshold, and CLR_Threshold is the time period of the clearing threshold. At this time, the Node D transmits the clearing packet CLR.

At timing t6, the Node E detects that the CLR packet is correctly received, and then clears its current non-zero NAV value to zero.

At timing t7, the Node E can receive the RTS from the Node F, and determines that it is the destination receiving node of the RTS packet transmitted by the Node F, and thus transmits the CTS packet at timing t8 after delaying the SIFS time interval in response to the reception of the RTS.

The present invention takes into account the unnecessary NAV settings by hidden terminals caused by the transmission failure of the CTS in the wireless distributed network. Therefore, the performance of the wireless system such as throughput and time delay can be improved.

It should be noted that the medium access control method of the present invention can be implemented by hardware, software or any combination thereof.

The present invention has already been described with the preferred embodiments thereof as far. It should be understood by those skilled in the art, many variations, substitutions and additions are possible without departing from the spirits and scopes of the present invention. Therefore, the scopes of the invention should not be construed to be limited to the above specific embodiments but should be limited by the appended claims.

## Claims

1. A medium access control method in a wireless network comprising the steps of:
receiving a request to sent (RTS) packet, and detecting whether a receiving node address contained in the RTS packet is identical with an address of a present node;
transmitting a clear to send (CTS) packet after delaying a short inter-frame spaces (SIFS) time interval in response to the received RTS packet when the receiving node address contained in the RTS packet is identical with the address of the present node, and detecting a channel;
if the node transmitting the CTS packet detects that the channel is idle after a predetermined time interval of a clearing threshold, the transmitting node transmits a clearing packet to the network to reset network allocation vectors (NAVs) of other nodes to zero.

2. The method according to Claim 1, further comprising the step of beginning to receive said data packet if the node transmitting the CTS packet detects a data transmission on the channel within the predetermined time interval of the clearing threshold.

3. The method according to Claim 1, wherein the step of detecting whether a receiving node address contained in the RTS packet is identical with an address of a present node further comprises the step of the present node being considering as a destination receiving node if the receiving node address contained in the RTS packet is identical with the address of the present node.

4. The method according to Claim 1, wherein said CTS packet contains a predetermined duration field.

5. The method according to Claim 4, further comprising the step of extracting and comparing said duration field in the CTS packet with a value of the NAV stored in the present node, and updating the value of the NAV with a larger value based on the comparison if the node receiving said CTS packet determines that the receiving node address contained in the CTS is different from the address of the present node.

6. The method according to any one of Claims 1 to 5, wherein said predetermined time interval of the clearing threshold equals to a time period which the receiving node will definitely begin to receive the data packet from the transmitting node after this time interval of the clearing threshold if the CTS packet is successfully received by the transmitting node.

7. The method according to any one of Claims 1 to 5, wherein said predetermined time interval of the clearing threshold equals to the SIFS plus a time period required for completing a carrier sensing.

8. A medium access control method in a wireless network, comprising the steps of:
transmitting a clear to send (CTS) packet after delaying a short inter-frame space (SIFS) time interval when a node in the network receives a request to send (RTS) packet addressed to the node;
detecting a channel and timing, if the channel is detected in idle for a time interval of the clearing threshold after the completion of the CTS transmission, and transmitting a clearing packet after the time interval of the clearing threshold is elapsed;
resetting the network allocation vectors (NAVs) of all the nodes receiving the clearing packet to zero.

9. The method according to Claim 8, further comprising the step of judging whether a receiving node address contained in the received RTS packet is identical with an address of a present node.

10. The method according to Claim 9, further comprising the step of determining the present node being as a destination receiving node if the receiving node address contained in the received RTS packet is identical with the address of the present node.

11. The method according to Claim 9, further comprising the step of determining the present node as a non-receiving node if the receiving node address contained in the received RTS packet is not identical with the address of the present node.

12. The method according to Claim 11, further comprising the step of extracting a duration field from the RTS packet by said non-receiving node, and comparing with a value of the NAV stored in the present node, and updating the NAV with a larger value based on the comparison.

13. The method according to Claim 8, further comprising the step of judging whether a receiving node address contained in the received CTS packet is identical with the address of the present node.

14. The method according to Claim 13, further comprising the step of extracting a duration field from the CTS packet and comparing with a value of the NAV stored in the present node, and updating the NAV with a larger value based on the comparison if the node receiving said CTS packet determines that the receiving node address contained in the CTS packet is not identical with the address of the present node.

15. The method according to Claim 13, further comprising the step of transmitting a data packet if the node receiving said CTS packet determines that the receiving node address contained in the CTS packet is identical with the address of the present node.

16. The method according to Claim 15, further comprising the step of transmitting an acknowledgement (ACK) packet if the node receiving said data packet determines that a receiving node address contained in said data packet is identical with the address of the present node.

17. The method according to Claim 15, further comprising the step of extracting a duration field in the data packet and comparing the duration with a value of the NAV stored in the present node, and updating the value of the NAV with a larger value based on the comparison if the node receiving said data packet determines that the receiving node address contained in said data packet is not identical with the address of the present node.

18. The method according to Claim 16, further comprising the step of detecting whether a duration field of the ACK packet is zero, if not so, continuing to transmit a subsequent data packet if the node receiving said ACK packet determines that the receiving node address contained in said data packet is identical with the address of the present node.

19. The method according to Claim 16, further comprising the step of extracting a duration field in the ACK packet and comparing the duration with a value of the NAV stored in the present node, and updating the value of the NAV with a larger value based on the comparison if the node receiving said ACK packet determines that the receiving node address contained in said data packet is not identical with the address of the present node.

20. The method according to any one of Claims 8 to 19, wherein said predetermined time interval of the clearing threshold equals to a time period which the receiving node will definitely begin to receive the data packet from the transmitting node after this time interval of the clearing threshold if the CTS packet is successfully received by the transmitting node.

21. The method according to any one of Claims 8 to 19, wherein said predetermined time interval of the clearing threshold equals to the SIFS plus a time period required for completing a carrier sensing.

22. A medium access control method in a wireless distributed network, comprising the steps of:
transmitting by a transmitting node, a request to send (RTS) packet to a destination receiving node;
receiving said RTS packet by the destination receiving node, and transmitting a clear to send (CTS) packet after delaying a short inter-frame space (SIFS) time interval;
detecting a channel status after the destination receiving node transmits the CTS packet;
transmitting a clearing packet into the network to reset network allocation vectors (NAVs) of other nodes to zero if the destination receiving node detects that the channel status is still in idle after a predetermined time interval of the clearing threshold.

23. The method according to Claim 22, further comprising the step of resetting the NAVs of all the nodes receiving the clearing packet to zero.

24. The method according to Claim 22, further comprising the step of transmitting a data packet to the destination receiving node if the transmitting node receives the CTS packet transmitted from the destination receiving node.

25. The method according to any one of Claims 22 to 24, wherein said predetermined time interval of the clearing threshold equals to a time period which the receiving node will definitely begin to receive the data packet from the transmitting node after this time interval of the clearing threshold if the CTS packet is successfully received by the transmitting node.

26. The method according to any one of Claims 22 to 24, wherein said predetermined time interval of the clearing threshold equals to the SIFS plus a time period required for completing a carrier sensing.

27. A medium access control apparatus in a wireless distributed network, comprising:
a reception processing means for judging whether a packet is successfully received or not and determining the type of the packet, and instructing subsequent operations based on the judgment and determination results;
a channel detecting and timing means for detecting a channel status and timing, after transmitting a clear to send (CTS) packet, detecting the status of the channel for a predetermined time interval of a clearing threshold, and when the channel is idle after said time interval, instructing a transmitting means to transmit a clearing packet;
a network allocation vector (NAV) storage timing means for storing a NAV and updating a value of the NAV based on the processing result of the reception processing means.

28. The apparatus according to Claim 27, further comprising a delay means for delaying the transmission of the present node a corresponding time period when said reception processing means indicates that no packet is successfully received or said channel detecting and timing means indicates that no corresponding packet transmission is detected.

29. The apparatus according to Claim 27, wherein when said reception processing means indicates that the packet is successfully received and an address of the present node is not identical with a receiving node address contained in the packet, a duration field in said packet is compared with a value of the NAV stored in the NAV storage timing means, and the value of said NAV is updated with a larger value according to the comparison.

30. The apparatus according to Claim 27, wherein said predetermined time interval of the clearing threshold equals to a short inter-frame space (SIFS) plus a time period required for completing a carrier sensing.

31. The apparatus according to Claim 27, further comprising a channel accessing means for determining whether the medium access control apparatus is currently allowed to access the channel or not and providing a corresponding indication.

32. The apparatus according to Claim 27, further comprising a transmission storing means for storing a data packet from a higher layer.

33. A medium access control node used in a wireless distributed network, comprising:
a transmitting means for transmitting packets;
a receiving means for receiving data from a wireless channel and sending the data into a reception processing means;
a reception processing means for judging whether a packet is successfully received or not and determining the type of the packet, and instructing subsequent operations based on the judgment and determination;
a channel detecting and timing means for detecting the channel status and timing, after transmitting a clear to send (CTS) packet, detecting the status of the channel for a predetermined time interval of a clearing threshold, and when the channel is idle after said time interval, instructing the transmitting means to transmit a clearing packet;
a network allocation vector (NAV) storage timing means for storing a NAV and updating a value of the NAV based on the processing result of the reception processing means.

34. The node according to Claim 33, further comprising a delay means for delaying the transmission of the present node a corresponding time period when said reception processing means indicates that no packet is successfully received or said channel detecting and timing means indicates that no corresponding packet transmission is detected.

35. The node according to Claim 33, wherein when said reception processing means indicates that the packet is successfully received and an address of the present node is not identical with a receiving node address contained in the packet, a duration field in said packet is compared with a value of the NAV stored in the NAV storage timing means, and the value of said NAV is updated with a larger value according to the comparison.

36. The node according to Claim 33, further comprising a channel accessing means for determining whether the medium access control is currently allowed to access the channel or not and providing a corresponding indication.

37. The node according to Claim 33, wherein said predetermined time interval of the clearing threshold equals to a short inter-frame space plus a time period required for completing a carrier sensing.
